(19) Europäisches Patentamt
European Patent Office
Office européen des brevets

(11) EP 1 405 894 A2

(12) **EUROPEAN PATENT APPLICATION**

(43) Date of publication:
07.04.2004 Bulletin 2004/15

(51) Int Cl.7: **C09K 11/61**, G21K 4/00

(21) Application number: 03020428.3

(22) Date of filing: 11.09.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 24.09.2002 JP 2002276515
24.09.2002 JP 2002276516
24.09.2002 JP 2002276517
24.09.2002 JP 2002276518

(71) Applicant: KONICA CORPORATION
Tokyo (JP)

(72) Inventors:
• Maezawa, Akihiro, Konica Corp
Hino-shi, Tokyo 191-8511 (JP)
• Mishina, Noriyuki, Konica Corp.
Hino-shi, Tokyo 191-8511 (JP)

(74) Representative:
Gille Hrabal Struck Neidlein Prop Roos
Patentanwälte
Brucknerstrasse 20
40593 Düsseldorf (DE)

(54) **Radiation image conversion panel and production method of the same**

(57) A radiation image converting panel comprising a support having thereon a stimulable phosphor layer comprising a polymer and a stimulable phosphor produced by sublimation of a CsBr:Eu precursor, the stimulable phosphor layer having a thickness of 50 µm to 1 mm, wherein the stimulable phosphor has a spherical shape.

**Description**

## TECHNICAL FIELD

The present invention relates to a radiation image (or referred to as a radiological image) converting panel and a production method of the same.

## BACKGROUND

Heretofore, to obtain radiation images, a so-called radiographic method has been employed. However, a method has been developed in which radiation images are visualized without using silver salts. Namely, the following method is disclosed. Radiation which has passed through an object is absorbed by a phosphor. Subsequently, the phosphor is excited utilizing a certain type of energy, and radiation energy which is stored in the phosphor is allowed to be emitted as fluorescence which is detected to form images.

Known as a specific method is a radiation image converting method in which a panel comprising a support having thereon a stimulable phosphor layer is employed and either visible light or infrared radiation, or both, are employed (refer to U.S. Patent No. 3,859,527).

Developed as radiation image converting methods employing high luminance and high speed stimulable phosphors are, for example, a radiation image converting method using $BaFX:Eu^{2+}$ (wherein X is Cl, Br, or I) based phosphors described in Japanese Patent Application Open to Public Inspection No. 59-75200 and a radiation image converting method using alkali halide phosphors described in Japanese Patent Application Open to Public Inspection No. 61-72087. Further, developed are alkali halide phosphors containing metals such as $T1^+$, $Ce^{3+}$, $Sm^{3+}$, $Eu^{3+}$, $Y^{3+}$ $Ag^+$, $Mg^{2+}$, $Pb^{2+}$, and $In^{3+}$ as a co-activator, as described in Japanese Patent Application Open to Public Inspection Nos. 61-73786 and 61-73787.

Further, in recent years, in analysis of diagnostic images, a radiation image converting panel with higher sharpness is still being sought. As a means to enhance sharpness, a trial has been made in which for example, the shape of a stimulable phosphor itself is controlled to enhance speed as well as sharpness.

One method in such trails includes, for example, a method in which a stimulable phosphor layer comprised of minute pseudo-columnar blocks, described in Japanese Patent Application Open to Public Inspection No. 61-142497, is employed which is formed by accumulating a stimulable phosphor onto a support having a fine uneven pattern.

Further, proposed methods include a method to use a radiation image converting panel having a stimulable phosphor layer, in which, as described in Japanese Patent Application Open to Public Inspection No. 61-142500, cracks between columnar blocks, which are prepared by accumulating a stimulable phosphor on a support having a fine pattern, are subjected to a shock treatment so that the aforesaid cracks are allowed to grow and further, a method to use a radiation image converting panel in which, as described in Japanese Patent Application Open to Public Inspection No. 62-39737, a stimulable phosphor layer formed on a support is subjected to formation of cracks on the surface side to be pseudo-columnar, and further, a method in which, as described in Japanese Patent Application Open to Public Inspection No. 62-110200, a stimulable phosphor layer having voids is formed on a support, employing vacuum evaporation, and subsequently voids are allowed to grow by a thermal treatment so that cracks are provided.

Still further, Japanese Patent Application Open to Public Inspection No. 2-58000 describes a radiation image converting panel having a stimulable phosphor layer in which thin and long columnar crystals, having a definite slope with respect to the normal direction of a support, are formed on the aforesaid support, using a vapor phase growth method (being a vapor phase sedimentation method).

Recently, a radiation image converting panel has been proposed in which alkali halide, such as CsBr, is incorporated as a host and Eu is used as an activator. Particularly, by employing Eu as an activator, it has become possible to achieve enhancement of X-ray conversion efficiency, which has been considered to be impossible.

However, Eu exhibits markedly high thermal diffusion as well as high vapor pressure under vacuum, whereby problems occurred in which Eu was unevenly distributed in the host due to ease of scattering in the host. As a result, it has been difficult to achieve high X-ray conversion efficiency through activation employing activators, and thus commercial viability has not been realized.

Especially, when a rare earth element is used as an activator in order to achieve an X-ray conversion with high efficiency, heating during formation of a vapor deposition layer will affect as a radiation heat to the support resulting in influencing the thermal distribution of the rare earth metal.

Consequently, in the technology to activate using rare earth atoms, such as specifically Eu, it has been difficult to complete uniformity of the preferred activator with only controlling vapor pressure characteristics during formation of an evaporated layer under a vacuum condition.

Accordingly, improvements in luminance, sharpness and also uniform distribution of activators of the radiation image converting panel have been sought in the market.

In the CsBr:Eu phosphor radiation image converting panel produced by a vacuum evaporation method, difficulty of general utilization has been a problem, because Eu diffusion cannot be stably completed under the aforesaid state of vacuum conditions in formation of the phosphor layer, and also the limitation in handling is too much due to the usage of glass because of low moisture resistance of Eu.

Further, in cases when physical vapor deposition is performed in a vacuum evaporation method, a material utilizing efficiency ranges from an only few percent to 10%, resulting in high expense due to its low utilizing efficiency, and thus the generalized utilization has resulted in much difficulty.

On the other hand, barium iodides such as BFX:Eu (X = a halogen atom) were described as practically applied compounds in the past, which were used in a coating type stimulable phosphor layer. These are inexpensive, but the compounds exhibit low transparency in an emission range of 390 - 410 nm, and excessive scattering on the particle surface, resulting in the problem of lowered sharpness.

Patent Document 1: Japanese Patent Application Open to Public Inspection (hereinafter, referred to JP-A) No. 10-140148.

Patent Document: JP-A 10-265774

## SUMMARY

An object of the present invention is to provide a production method of a radiation image converting panel, and to provide phosphor particles, which exhibit less delayed luminescence and superiority of luminance unevenness, in addition to lower cost, higher luminance and higher sharpness.

The aforesaid object of the present invention can be accomplished by the following embodiments.

1. A radiation image converting panel comprising a support having thereon a stimulable phosphor layer containing a polymer and a stimulable phosphor produced by sublimation of a CsBr:Eu precursor, the stimulable phosphor layer having a thickness of 50 $\mu$m to 1 mm,
   wherein the stimulable phosphor has a spherical shape.
2. The radiation image converting panel of item 1,
   wherein the stimulable phosphor has an average particle diameter of 0.1 to 5 $\mu$m.
3. The radiation image converting panel of item 1,
   wherein the stimulable phosphor layer comprises Cs atom in an amount of not less than 10% based on the total weight of the layer.
4. The radiation image converting panel of item 1,
   wherein the stimulable phosphor layer comprises:

   (i) CsBr; and
   (ii) Eu and an impurity,

   an amount of Eu and the impurity being 100 to 1000 ppm by weight based on the total weight of CsBr.
5. The radiation image converting panel of item 1,
   wherein the stimulable phosphor is represented by Formula (1):

Formula (1)

$$M^1X \cdot aM^2X' \cdot bM^3X'' : eA$$

wherein $M^1$ is at least one alkaline metal atom selected from the group consisting of Li, Na, K, Rb, and Cs;, $M^2$ is at least one divalent metal atom selected from the group consisting of Be, Mg, Ca, Sr, Ba, Zn, Cd, Cu, and Ni; $M^3$ is at least one trivalent metal atom selected from the group consisting of Sc, Y, La, Ce, Pr, Nd, Pm, Sm, Sm, Eu, Gd, Tb, Dy, Ho, Er, Tm, Yb, Lu, Al, Ga and In; X, X', and X" each represents at least one halogen atom selected from the group consisting of F, Cl, Br, and I; A represents at least one metal atom selected from the group consisting of Eu, Tb, In, Ce, Tm, Dy, Pr, Ho, Nd, Yb, Er, Gd, Lu, Sm, Y, Tl, Na, Ag, Cu, and Mg; and a, b, and e each are numbers satisfying the conditions of $0 \le a < 0.5$, $0 \le b < 0.5$, and $0 < e \le 0.2$.
6. The radiation image converting panel of item 1,
   wherein the stimulable phosphor has a peak at (2,0,2) as a maximum peak measured with X-ray diffraction.
7. A method for producing the stimulable phosphor of item 1, comprising the steps of:

   (i) forming a CsBr:Eu precursor with an emulsified layer method by mixing:

(a) an aqueous solution containing Cs ions, Br ions and Eu ions;
(b) an organic solvent having a different solubility for the Cs ions, the Br ions and the Eu ions; and
(c) a surface active agent;

(ii) isolating the CsBr:Eu precursor, and
(ii) burning the CsBr:Eu precursor to obtain the stimulable phosphor.

8. A method for producing the stimulable phosphor of item 1, comprising the steps of:

(i) forming an aqueous phase containing Cs ions, Br ions and Eu ions;
(ii) adding an organic phase containing an organic solvent and an surface active agent to the aqueous phase so as to obtain a CsBr:Eu precursor;
(iii) isolating the CsBr:Eu precursor, and
(iv) burning the CsBr:Eu precursor to obtain the stimulable phosphor.

9. A method for producing the stimulable phosphor of item 1, comprising a step of:

heating the stimulable phosphor between 400 to 700 °C under an atmospheric pressure.

10. A method for producing the radiation image converting panel of item 1, comprising the steps of:

(i) mixing a stimulable phosphor and a polymer to obtain a coating mixture;
(ii) coating the coating mixture on a support to obtain a coated layer; and
(iii) heating the coated layer under an inactive gas atmosphere so as to dry the coated layer.

Namely, the inventors of the present invention found that minute particle crystals, crystallized with aqueous liquid phase deposition, exhibited superiority of crystallizability, exhibiting high transparency, and inhibited light scattering, regarding a phosphor in which the host is CsBr.

As a result, it was proven that crystals exhibiting excellent sharpness which is one of the image qualities obtained only with evaporated columnar crystals, can be obtained by using minute particle crystals employing the production method of the present invention during preparation of a coating composition for a coating type phosphor.

Further, in formation of CsBr phosphor minute particles, many cords are formed in a particle when CrBr crystals are deposited from an aqueous solution. Therefore, it was proved that oxygen combined on the phosphor surface results in unevenness in cases when the phosphor precursor particles deposited from a single solvent are burned, resulting in uneven luminance and degradation of delayed luminescence.

Consequently, as the result of wide range study, the inventors found that sharpness, luminance property and also delayed luminescence characteristics could be enhanced when a saturated aqueous solution layer containing Cs ions, and an organic layer formed by adding a surface active agent into an organic solvent, were mixed and stirred to precipitate CsBr, resulting in spherical phosphor particles to increase mass density in the phosphor layer.

**BRIEF DESCRIPTION OF THE DRAWINGS**

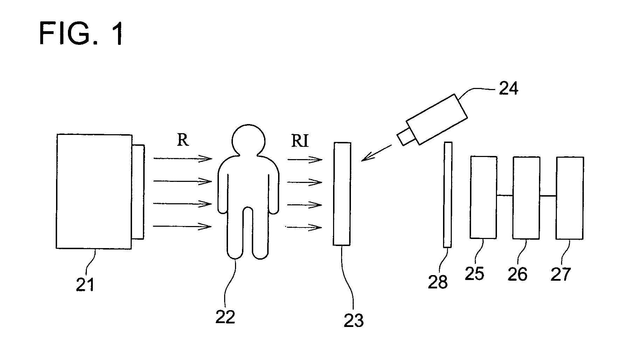

Fig. 1 is a schematic diagram of a composition using a radiation image converting panel of the present invention.

**DESCRIPTION OF THE PREFERRED EMBODIMENTS**

The present invention will be further detailed.

The present invention is characterized by employing a radiation image converting panel which exhibits high stability and also high luminance and high sharpness at low cost, when a stimulable phosphor layer is formed with a phosphor containing CsBr:Eu phosphor particles and a polymer at a thickness of 50 μm - 1 mm, in which the stimulable phosphor particles are spherical.

One method of forming spherical particles is based on an emulsifying formation method, in which the spherical particles can be produced with the following steps:

(i) forming a CsBr:Eu phosphor precursor with an emulsified layer method by mixing:

(a) an aqueous solution containing Cs, Br and Eu ions;

(b) an organic solvent having a different solubility for the Cs, Br and Eu ions; and

(c) a surface active agent; and

(ii) burning the CsBr:Eu phosphor precursor to obtain the stimulable phosphor.

As a result, a stimulable phosphor, being superior in image characteristics such as delayed luminescence characteristics, sharpness and luminance, can be produced.

An organic layer may be formed by using, for example, EDTA (ethylenediaminetetraacetic acid), DTPA (diethylenetriaminepentaacetic acid), and their salts, DTMBA, higher fatty acid esters, and higher fatty acids and their salts; a commercially available nonionic, anionic or cationic surface active agent; and an organic solvent such as isopropyl alcohol and butanol.

As methods to form spherical particles, there are, for example, a method to stir a liquid phase and an organic layer using a homogenizer, and a method to add the organic layer of an organic solvent to which a surface active agent has been added to the liquid phase after the liquid phase is formed, and to stir the mixture using a homogenizer.

The term "spherical particles" here means particles which have a ratio of the long to the short dimensions being 0.95 - 1.05, employing an SEM observation method.

Further, in this invention, the stimulable phosphor layer of the present invention can be produced with a coating method, which comprises a phosphor and a polymer resin, and is coated onto a support using a coater.

As a stimulable phosphor used in a coating type phosphor layer, generally employed is a stimulable phosphor exhibiting stimulated emission in a wavelength range of 300 - 500 nm with stimulating light in a wavelength range of 400 - 900 nm.

The present invention is characterized by providing a radiation image converting panel exhibiting stability of a phosphor (being less delayed luminescence), less luminance unevenness, and superiority in sharpness and luminance, which stimulable phosphor layer is formed with phosphor particles having CsBr:Eu phosphor particles and a polymer so as to have a thickness of from 50 μm to 1 mm, and to make a particle diameter of the phosphor particles from o.1 to less than 5 μm.

To make the particle diameter of the phosphor particles from 0.1 - less than 5 μm, the surface area of the phosphor surface is increased, resulting in increase of Eu presence on the surface. As a result, an effect of aggregation is observed, but estimated is that uniform presence state of Eu with a treatment at a relatively lower temperature is allowed, resulting in being stabilized as electrical discharge, because the configuration state of Eu existing on the surface exhibits directional property between the surfaces and the interior when the surface at,osphere is controlled under Ar. Accordingly, the activators in the stimulable phosphor layer (hereinafter, also refers to simply a phosphor layer) can be formed uniformly, and thus, it is possible to provide a radiation image converting panel exhibiting high luminence and high sharpness, and to provide a production method for the radiation image converting panel.

The present invention is characterized by a production method for a phosphor comprising the steps of:

(i) forming a CsBr:Eu phosphor precursor in the radiation image converting panel of the present invention with addition of an organic solvent into the liquid phase containing Cs, Br and Eu ions; and

(ii) burning the CsBr:Eu phosphor precursor to obtain the stimulable phosphor.

As an organic solvent, for example, usable is toluene or MEK having difference of dielectric constant from water, and in addition, cyclohexane or dimethylholmamide which are polar.

The present invention is characterized by obtaining a radiation image converting panel exhibiting less delayed luminescence, and high luminance and high sharpness, by formation of at least one stimulable phosphor layer in the radiation image converting panel with phosphor particles having a compound containing Cs more than 10 weight% and a polymer to have a thickness of 50 μm - 1 mm. The upper limit of Cs content is 64 weight% or less.

The present invention is characterized by that the phosphor particles contained in the radiation image converting panel of this invention is heated to more than 400 °C and to less than 700 °C under an atmospheric pressure.

Namely, as mentioned above, the phosphor exhibiting superiority in moisture resistance can be obtained due to increased stability of Eu diffusion in a phosphor particle and decreased surface defects, by eliminating heating process of the phosphor under a vacuum or decreased pressure.

The present invention will be detailed below.

In the radiation image converting panel of the present invention comprising a support thereon a stimulable phosphor layer, in which at least one layer of the stimulable phosphor layers is formed with a phosphor produced by sublimation of a CsBr:Eu precursor and a polymer at a thickness of 50 μm - 1 mm, wherein the content of a compound other than CsBr which forms a host of the phosphor.

Examples of compounds forming a host of the phosphor include for example, alkali metal halides such as

NaBr, KBr, RbBr, $MgBr_2$, $CaBr_2$, $BaBr_2$, $SrBr_2$, and $EuBr_2$; alkali earth metal halides; and halides or oxides of rare-earth elements.

In this invention, it is preferable that the stimulable phosphor exhibits a maximum peak in (2,0,0) surface measured with powder X-ray diffraction.

The present invention is characterized by a stimulable phosphor (hereinafter, referred to simply as phosphor) formed with a phosphor produced through a process of obtaining the phosphor particles by sublimation of a CsBr:Eu precursor. Sublimation Purification Method

Phosphor raw material (in the case when a precursor is CsBr:Eu) is heated to more than 650 °C to obtain a CsBr:Eu precursor.

The obtained CsBr:Eu precursor is sublimated to separate compounds other than CsBr at 600 - 700 °C in an Ar gas atmosphere using a rotary kiln, and then trapped in a cooling zone through a by-pass to obtain CsBr:Eu phosphor as a host. Thus, it is possible to bring the content of compounds other than CsBr of the host in the phosphor to 100 - 1,000 ppm.

The stimulable phosphors represented by aforesaid Formula (1), which are preferably employed in the present invention, will now be described.

In the stimulable phosphors represented by aforesaid Formula (1), $M^1$ is at least one alkaline metal atom selected from the group consisting of Li, Na, K, Rb, and Cs. Of these, at least one alkaline earth metal atom selected from Rb and Cs is preferred and Cs is more preferred.

$M^2$ represents at least one divalent metal atom selected from the group consisting of Be, Mg, Ca, Sr, Ba, Zn, Cd, Cu, and Ni. Of these, preferably employed are divalent metal atoms selected from the group consisting of Be, Mg, Ca, Sr, and Ba.

$M^3$ represents at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In. Of these, preferably employed are trivalent metal atoms selected from the group consisting of Y, Ce, Sm, Eu, Al, La, Gd, Lu, Ga, and In.

"A" represents at least one metal atom selected from the group consisting of Eu, Tb, In, Ce, Tm, Dy, Pr, Ho, Nd, Yb, Er, Gd, Lu, Sm, Y, Tl, Na, Ag, Cu, and Mg.

From the viewpoint of enhancing the luminance of photostimulated luminescence of the stimulable phosphors, X, X', and X" each represents at least one halogen atom selected from the group consisting of F, Cl, Br, and I. Of these, preferred is at least one halogen atom selected from the group consisting of F, Cl, and Br. Further, of these, preferred is at least halogen atom selected from Br and I.

Raw materials of phosphor are as follow.

(a) At least one compound selected from the group consisting of NaF, NaCl, NaBr, NaI, KF, KCl, KBr, KI, RbF, RbCl, RbBr, RbI, CsF, CsCl, CsBr, and CsI is employed.
(b) At least one compound selected from the group consisting of $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2.2H_2O$, $BaI_2$, $ZnF_2$, $ZnCl_2$, $ZnBr_2$, $ZnI_2$, $CdF_2$, $CdCl_2$, $CdBr_2$, $CdI_2$, CuF2, $CuCl_2$, $CuBr_2$, $CuI_z$, $NiF_2$, $NiCl_2$, $NiBr_2$, and $NiI_2$ is employed.
(c) In aforesaid Formula (1), compounds are employed which have a metal atom selected from the group consisting of Eu, Tb, In, Cs, Ce, Tm, Dy, Pr, Ho, Nd, Yb, Er, Gd, Lu, Sm, Y, Tl, Na, Ag, Cu, and Mg.

In the compound represented by Formula (1), "a" is a number satisfying the condition of $0 \le a < 0.5$, and is preferably a number satisfying the condition of $0 \le a < 0.01$; "b" is a number satisfying the condition of $0 \le b < 0.5$, and is preferably a number satisfying the condition of $0 \le b < 10^{-2}$ ; and "e" is a number satisfying the condition of $0 \le e < 0.2$, and is preferably a number satisfying the condition of $0 \le e < 0.1$.

Raw materials of phosphors of aforesaid (a) through (c) are mixed so as to achieve a mixing composition to satisfy the aforesaid conditions and are dissolved in water.

In such a case, the aforesaid raw materials may well be blended employing a mortar, a ball mill, or a mixer mill.

Subsequently, pH value C of the resulting aqueous solution is adjusted to satisfy the condition of $0 < C < 7$ by adding the specified acid. Thereafter, water is removed by evaporation.

In such a case, the foregoing raw materials may well be blended employing a mortar, a ball mill, or a mixer mill. Of the foregoing stimulable phosphors, it is preferable that the stimulable phosphor particles contains iodine, for example, an iodine containing divalent europium activated alkali earth metal fluorinated halide type phosphor, an iodine containing divalent europium activated alkali earth metal halide type phosphor, an iodine containing rare-earth activated oxyhalide type phosphor, and an iodine containing bismuth activated alkali metal halide type phosphor, due to their high luminance of stimulated emission. Specifically, a stimulable phosphor is preferably an Eu added BaFI compound.

In the present invention, examples of binders used in the phosphor layer include proteins such as gelatin, polysaccharides such as dextran, natural high molecular compounds such as gum arabic, and synthetic high polymer compounds such as polyvinyl butyral, polyvinyl acetate, nitro cellulose, ethyl cellulose, vinylidene chloride-vinyl chloride copolymer, polyalkyl (meth)acrylate, vinyl chloride-vinyl acetate copolymer, polyurethane, cellulose acetate butyrate, polyvinyl alcohol, linear polyester. However, in this invention, the binder is characteristically a resin which major component is a thermoplastic elastomer. Examples as a thermoplastic elastomer include a polystyren type thermoplastic elastomer, a polyolefin type thermoplastic elastomer, a polyurethane type thermoplastic elastomer, a polyester type thermoplastic elastomer, a polyamide type thermoplastic elastomer, a polybutadiene type thermoplastic elastomer, an ethylene vinyl acetate type thermoplastic elastomer, a polyvinyl chloride type thermoplastic elastomer, a natural rubber type thermoplastic elastomer, a fluorine rubber type thermoplastic elastomer, a polyisoprene type thermoplastic elastomer, a chlorinated polyethylene type thermoplastic elastomer, and a styrene-butadiene rubber and a silicone rubber type thermoplastic elastomers.

Of these, a polyurethane type thermoplastic elastomer and a polyester type thermoplastic elastomer are preferable because their dispersiveness is good enough due to a strong binding force with a phosphor, as well as flexibility of a radiation intensifying screen is favorable due to abundant ductility. Further, these binders may be cross-linked with a cross-linking agent.

The mixing ratio of a binder and a stimulable phosphor in the coating composition is preferably 1 - 20 weight parts to the phosphor, and more preferably 2 - 10 weight parts, depending on a setting value of a haze rate of a targeted radiation image converting panel.

Examples of organic solvents used for preparation of a coating composition of the stimulable phosphor layer include lower alcohols such as methanol, ethanol, isopropanol, and n-butanol; ketones such as acetone, methyl ethyl ketone, methyl isobutyl ketone, and cyclohexane; esters of a lower aliphatic acid and a lower alcohol such as methyl acetate, ethyl acetate, and n-butyl acetate; ethers such as dioxane, ethylene glycol monoethyl ether, and ethylene glycol monomethyl ether; aromatic compounds such as triol and xylol; and halogenated hydrocarbons such as methylene chlorede and ethylene chloride, and their mixture.

In the coating composition, various addition agents can be mixed, for example, a dispersion agent to enhance dispersiveness of the phosphor in the coating composition, and a plasticizer to enhance bonding force between a binder, in a stimulable phosphor layer after formation, and a phosphor. Examples of dispersion agents used for this purpose include phthalic acid, stearic acid, caproic acid and a hydrophobic surface active agent. Examples of plasticizers include phosphates such as triphenyl phosphate, tricresyl phosphate, and diphenyl phosphate; phthalates such as diethyl phthalate, and dimethoxyethyl phthalate; glycolates such as ethylphthalylethyl glycolate, and butylphthalylbutyl glycolate; polyesters of polyethylene glycol and an aliphatic dibasic acid such as a polyester of triethylene glycol and adipic acid, and a polyester of diethylene glycol and succinic acid. Further, in the stimulable phosphor layer coating composition, a dispersion agent such as stearic acid, phthalic acid caproic acid and a hydrophobic surface active agent may be mixed for the purpose of enhancing dispersiveness of the stimulable phosphor particles.

Preparation of the coating composition for the stimulable phosphor layer is conducted using a dispersion apparatus such as a ball mill, a beads mill, a sand mill, an atoliter, a three-roll mill, a high speed impeller disperser, a Kady mill, and a ultrasonic homogenizer.

The coated layer is formed with uniform coating of the coating composition prepared as above onto a support surface mentioned later. Usable coating methods include common coating methods using such as a doctor blade, a roll coater, a knife coater, a comma coater, and a lip coater.

The coated layer formed by the above means is heated and dried to complete formation of the stimulable phosphor layer on the support. The thickness of the stimulable phosphor layer differs depending on characteristics of a targeted radiation image converting panel, kinds of a stimulable phosphor, and the mixing ratio of a binder and a phosphor, however, in the present invention, the thickness is preferably 0.5 1 mm, and more preferably 10 - 500 $\mu$m.

Further, a high light absorbing material and a high light reflecting material can be contained in the stimulable phosphor layer. By this, scattering to lateral direction of stimulating light emitted into the stimulable phosphor layer is effectively reduced.

High reflectance materials, as described herein, refer to materials which result in high reflectance against the stimulating light (having a wavelength of 500 to 900 nm, and especially a wavelength of 600 to 800 nm). Employed as such materials may be, for example, metals such as aluminum, magnesium, silver, and indium, white pigments, and colorants in the green to red range. White pigments are capable of reflecting photostimulated luminescence.

Examples of white pigments include $TiO_2$ (including an anatase type as well as a rutile type), MgO, $PbCO_3$ $Pb(OH)_2$, $BaSO_4$ $Al_2O_3$, $M_{(xx)}FX$ (wherein $M_{(xx)}$ is at least one atom selected from the group consisting of Ba, Sr, and Ca, and X is a Cl atom or a Br atom), $CaCO_3$, ZnO, $Sb_2O_3$, $SiO_2$, $ZrO_2$, lithopone ($BaSO_4.ZnS$), magnesium silicate, basic silicic sulfates, basic lead phosphates, and aluminum silicate.

These white pigments exhibit high covering power as well as a large refractive index. As a result, they easily diffuse photostimulated luminescence through its reflection and refraction, whereby it is possible to markedly increase the speed of the resulting radiation image converting panel.

Further, employed as high light-absorbing materials are, for example, carbon black, chromium oxide, nickel oxide, and iron oxide as well as blue colorants. Of these, carbon black absorbs the photostimulated luminescence.

Still further, the aforesaid colorants may be either organic or inorganic.

Employed as organic colorants may be, for example, Zapon Fast Blue 3G (manufactured by Hoechst AG), Estrol Brill Blue N-3RL (manufactured by Sumitomo Kagaku Co., Ltd.), D & C Blue No. 1 (manufactured by National Aniline), Spirit Blue (manufactured by Hodogaya Kagaku Kogyo Co., Ltd.), Oil Blue No. 603 (manufactured by Orient Co., Ltd.), Kiton Blue A (manufactured by Ciba-Geigy), Aizen Catholin Blue GLH (manufactured by Hodogaya Kagaku Kogyo Co., Ltd.), Lake Blue AFH (manufactured by Kyowa Sangyo Co., Ltd.), Primocyanine 6GX (manufactured by Inahata Sangyo Co., Ltd.)), Brillacid Green 6BH (manufactured by Hodogaya Kagaku Kogyo Co., Ltd.), Cyanine Blue BNRCS (manufactured by Toyo Ink Manufacturing Co., Ltd.), and Lionol Blue SL (manufactured by Toyo Ink Manufacturing Co., Ltd.).

Further, also listed as organic colorants are organic metal complex colorants such as Color Index Nos. 24411, 23160, 74180, 74200, 22800, 23154, 23155, 14401, 14830, 15050, 15760, 15707, 17941, 74220, 13425, 13361, 13220, 11836, 74140, 74380, 74350, and 74460.

Listed as inorganic colorants are ultramarine blue such as cobalt blue and cerulean blue, and inorganic pigments such as chrome oxide and $TiO_2$-ZnO-Co-NiO based pigments.

Further, the stimulable phosphor layer of the present invention may be provided with a protective layer.

The aforesaid protective layer may be formed by applying a protective layer coating composition directly onto the stimulable phosphor layer or a protective layer which is separately formed may be adhered onto the stimulable phosphor layer. Alternatively, a means may be employed in which the stimulable phosphor layer is formed on the protective layer which is separately formed.

Employed as materials for the protective layer are common materials for protective layers, such as cellulose acetate, nitrocellulose, polymethyl methacrylate, polyvinyl butyral, polyvinyl formal, polycarbonate, polyester, polyethylene terephthalate, polyethylene, polyvinylidene chloride, nylon, polytertafluorinated ethylene, polytrifluorinated-chlorinated ethylene, tetrafluorinated ethylene-hexafluorinated propylene copolymers, vinylidene chloride-vinyl chloride copolymers, and vinylidene chloride-acrylonitrile copolymers. Other than these, employed as the protective layer may be transparent glass substrates.

The thickness of the aforesaid protective layers is preferably from 0.1 to 2,000 μm.

Fig. 1 is a schematic view showing one example of the constitution of the radiation image converting panel of the present invention.

In Fig. 1, numeral 21 is a radiation generating apparatus, 22 is an object, 23 is a radiation image converting panel provided with a visible light and infrared radiation stimulable phosphor layer comprising stimulable phosphors, 24 is a stimulating light source which allows a radiation latent image of radiation image converting panel 23 to emit as photostimulated luminescence, 25 is a photoelectric conversion apparatus which detects the photostimulated luminescence emitted from radiation image converting panel 23, 26 is an image reproducing apparatus which reproduces photoelectric conversion signals detected by photoelectric conversion apparatus 25 as an image, 27 is an image display apparatus which displays the reproduced images, and 28 is a filter which eliminates reflection light form stimulating light source 24 and transmits only light emitted from radiation image converting panel 23.

Incidentally, Fig. 1 shows an example to obtain a radiation transmitted image of an object. However, when object 22 itself emits radiation, aforesaid radiation generating apparatus 21 is not particularly necessary.

Further, apparatuses following photoelectric conversion apparatus 25 may be any apparatuses as long as it is possible to reproduce light information from radiation image converting panel 23 to an image in any form, and are not limited to the foregoing.

As shown in Fig. 1, when object 22 is arranged between radiation generating apparatus 21 and radiation image converting panel 23 and then subjected to exposure of radiation R, radiation R is transmitted through object 22 in accordance with radiation transmittance of each portion of object 22. The resulting transmission image RI (i.e., the image formed depending on the intensity of radiation) is incident to radiation image converting panel 23.

The resulting incident transmission image RI is absorbed by the stimulable phosphor layer of radiation image converting panel 23, whereby the number of electrons and/or positive holes proportional to the radiation amount, which is absorbed by the stimulable phosphor layer, is generated. The resulting electrons and/or positive holes are stored in the trap level of the stimulable phosphor.

Namely, formed is a latent image which stores energy of a radiation transmission image. Subsequently, the resulting latent image is excited employing light energy so as to be visualized.

Further, the stimulable phosphor layer is exposed employing stimulating light source 24, which emits visible light or infrared radiation so that electrons and/or positive holes stored in the aforesaid trap level are expelled to release the stored energy as photostimulated luminescence.

The intensity of the aforesaid released photostimulated luminescence is proportional to the number of electrons and/or positive holes, i.e., the magnitude of radiation energy absorbed by the stimulable phosphor layer of radiation image converting panel 23. The resulting light signals are converted to electric signals, employing photoelectric conversion apparatus 25 such as a photomultiplier tube and are reproduced as an image, employing image reproduction apparatus 26. The reproduced image is then displayed employing image display apparatus 27.

Image reproduction apparatus 26 is more effectively employed when it is capable of carrying out so-called image processing, image operation, image memory and storage, other than reproduction of electric signals to image signals.

Further, due to the following reasons, it is preferable that photostimulated luminescence emitted from the stimulable phosphor layer has a spectrum distribution in the wavelength region which is as short as possible. During excitation employing light energy, it is necessary to separate the reflected light of stimulating light from photostimulated luminescence emitted from the stimulable phosphor layer. A photoelectric conversion unit commonly exhibits higher response to radiation energy of wavelength of less than or equal to 600 nm.

The emission wavelength region of the stimulable phosphor of the present invention is from 300 to 500 nm. On the other hand, the stimulating radiation wavelength ranges from 500 to 900 nm. As a result, the aforesaid conditions are simultaneously satisfied. Recently, the overall size of diagnostic apparatuses has decreased. As a result, semiconductor lasers, which are easily subjected to a decrease in size, are preferred which result in higher output of radiation having the wavelength employed for reading out images of the radiation image converting panel. The wavelength of the laser beam is preferably 680 nm. When excitation radiation having a wavelength of 680 nm is used, the stimulable phosphor arranged in the radiation image converting panel of the present invention exhibits excellent sharpness.

Namely, all stimulable phosphors of the present invention emit radiation having a main peak of less than or equal to 500 nm. In addition, stimulating light is easily separated and the resulting emission well matches the spectral sensitivity of a radiation receiving device, whereby it is possible to increase the speed of the image receiving system.

Employed as a stimulating light source is a light source including the stimulating light wavelength of the stimulable phosphor used in radiation image converting panel 23. Specifically, the use of laser beams simplifies the optical system and increases the intensity of the stimulating light, whereby it is possible to enhance the efficiency of photostimulated luminescence, while achieving more preferred results.

Examples of lasers include He-Ne lasers, He-Cd lasers, Ar ion lasers, Kr ion lasers, $N_2$ lasers, YAG lasers and second higher harmonics thereof, ruby lasers, semiconductor lasers, various dye lasers, and metal vapor lasers such as a copper vapor laser. Commonly, preferred are continuously oscillating lasers such as He-Ne lasers and Ar lasers. In addition, when a single pixel scanning time and a pulse are synchronized, it is possible to use pulse oscillating lasers.

Further, when, by eliminating filter 28, the aforesaid separation is carried out employing a method utilizing the delay of the emission, as shown in Japanese Patent Publication Open to Public Inspection No. 59-22046, it is more preferable to use a pulse oscillating laser rather than a continuously oscillating laser which has been modulated.

Of the aforesaid various laser beam sources, semiconductor lasers are most preferably employed since they are small-sized, less expensive, and require no modifiers.

Filter 28 transmits photostimulated luminescence emitted from radiation image converting panel 23 and absorbs stimulating light. Accordingly, filter 28 is specified depending on the combination of wavelength of photostimulated luminescence of the stimulable phosphor incorporated in radiation image converting panel 23 and of stimulating light source 24.

For example, in the case of a practically preferable combination such as combination of a stimulating wavelength of 500 to 900 nm and a photostimulated luminescence wavelength of 300 to 500 nm, employed as filters may be, for example, violet to blue glass filters such as C-39, C-40, V-40, V-42, and V-44, produced by Toshiba Corp., 7-54 and 7-59, produced by Corning Incorporated, and BG-1, BG-3, BG-25, BG-37, and BG-38, produced by SpectroFilm. Further, when interference filters are used, it is possible to select and use filters having somewhat optional characteristics. Employed as photoelectric conversion apparatus 25 may be any of those such as photoelectric tubes, photomultiplier tubes, photodiodes, photo-transistors, solar cells, and photoconductive elements which are capable of converting the variation of light amount to electric signals.

### EXAMPLE

The present invention will be further described below based on examples, but it is by no means limited to these embodiments.

### Example I

Preparation of Radiation Image Conversion Panel Samples I-1 through I-9 (described as Samples I-1 through I-9 in Table I) Forming Method of Stimulable Phosphor

$CsCO_3$, HBR and $Eu_2O_3$ were dissolved in water to obtain a solution to result in a Eu amount of 5/10,000 mol per mol of CsBr. To obtain an aqueous solution liquid phase (an aqueous phase), the solution was condensed to a saturated solution at 90 - 110 °C.

After forming a liquid film phase in which EDTA was added to isopropyl alcohol, that aqueous solution liquid phase and the liquid film phase were mixed at 3,000 rpm, using a homogenizer, resulting in deposition of spherical CsBr particles to obtain a CsBr: Eu phosphor precursor at an average particle diameter of 5 μm. The ratio of the aqueous phase and the liquid film phase was 1: 1.

To obtain the phosphor, this CsBr: Eu phosphor precursor was calcined in an Ar gas atmosphere at 620 °C for 2 hrs.

In order to form a phosphor layer, the foregoing phosphor and a polyester solution (VYLON 63ss, produced by TOYOBO CO., LTD.) were mixed and dispersed to obtain a coating composition of a resin solution of 95 weight% solid content and 5 weight% phosphor.

The thus obtained coating composition was coated onto 188 μm polyethylene terephthalate film (188 X30, produced by Toray Co., Ltd.), to obtain a stimulable phosphor layer, providing three drying zones of 80, 100 and 110 °C with a CS (a coating rate) of 2 m/min in an inert atmosphere drying oven using Ar gas, after coating.

The support having the foregoing stimulable phosphor layer was sealed into a barrier-envelope having a backing coat with deposition of an alumina oxide, to obtain Radiation Image Conversion Panel Sample 1.

Radiation Image Conversion Panel Samples I-2 through I-9 were prepared in the same manner as in Example I, except that the ratio of an aqueous phase and an organic phase, and also the kinds of organic solvents (having different solubility) in Example I in the preparation of phosphor particles were changed as described in Table I.

Each of the thus obtained samples was evaluated in regard to the following characteristics.

Evaluation of Sharpness

Sharpness of each of the obtained radiation image conversion panels was evaluated by determination of a modulation transfer function (MTF).

After a CTF chart was adhered to the respective radiation image conversion panel, each of the panels was X-rayed at 80 kVp in an amount of 10 mR (the distance to the subject being 1.5 m). And then, MTF was determined by scanning the CTF chart image using a semiconductor laser having a diameter of 100 μmφ (680 nm, at a power of 40 mW on the panel). The values on the table were the sum of MTF values at 2.0 1p/mm. The obtained results are shown in Table 1.

Evaluation of Luminance and Luminance Distribution

(Unevenness)

Luminance was evaluated using a Regius 350 manufactured by Konica Corp.

Identical to evaluation of sharpness, after the plates were X-rayed at 80 kVp and 10 mAs of a tungsten lamp, at a distance of 2 m between the radiation source and the plates, the plates were placed to be read in a Regius 350. Evaluation was conducted based on electrical signals obtained through a photo multiplier tube.

The electrical signal distribution from a photo multiplier tube in an exposure phase was evaluated relatively, and the standard deviation was determined to obtain a luminance distribution (S.D.) of each sample. When the value is smaller, the luminance unevenness is less. Evaluation of Delayed luminescence

A piece of 50 x 50 mm was cut from each of the samples, and pasted to a board to be placed into a cassette for exposure.

After X-ray exposure of the piece, the differences of signals between the 1st and the 50th recording spot from the edge, at the time of reading, were designated as delayed luminescence values. The average particle size of the stimulable phosphor particles was the average value of 100 phosphor particles measured using an optical particle distribution meter employing a laser scattering method, SALD-DS21 manufactured by Shimadzu Corp. after dispersion of CsBr: Eu into an ethanol solvent using an ultrasonic mixer for 2 min.

Further, the shapes of the phosphor particles in each sample were visibly observed with a SEM direct observation method, and the particles having ratio of the long and short edges being 0.95 - 1.05 were considered to be spherical.

As a result, the shapes of Samples I-1 through I-8 were spherical and that of Comparative Sample I-9 was amorphous or irregular shape.

The obtained results are shown in Table I.

Table I

| | Addition method of phosphor precursor formation | | | Luminance | MTF (2.0 lp/mm (%) | Luminance unevennes (S.D.) | Delayed luminescence | Average particle size (μm) |
|---|---|---|---|---|---|---|---|---|
| | Organic solvent | Ratio | Before/ After | | | | | |
| Sample I-1 | IPA | 1:1 | Before | 1.87 | 34 | 12 | 0.00004 | 4.9 |
| Sample I-2 | BuOH | 1:1 | Before | 1.92 | 33 | 8 | 0.00002 | 3.8 |
| Sample I-3 | IPA | 2:1 | Before | 1.88 | 32 | 6 | 0.00003 | 2.7 |
| Sample I-4 | IPA | 3:1 | Before | 1.72 | 41 | 5 | 0.00007 | 1.3 |
| Sample I-5 | IPA | 1:1 | After | 1.62 | 42 | 3 | 0.00005 | 7.2 |
| Sample I-6 | IPA | 2:1 | After | 1.58 | 44 | 3 | 0.00004 | 5.4 |
| Sample I-7 | IPA | 3:1 | After | 1.72 | 31 | 13 | 0.00001 | 2.8 |
| Sample I-8 | IPA | 1:1 | Before | 1.55 | 35 | 4 | 0.00008 | 4.7 |
| Sample I-9 (Comp.) | - | - | - | 0.82 | 22 | 36 | 0.00032 | 5.9 |

Note 1: Before addition (before) means that aqueous phases were formed at the same time, and after addition (after) means that the 2nd aqueous phase was added after measuring with a tube pump.

Note 2: Ratio means the ratio of the aqueous phase and the liquid film phase (the organic phase, containing a surface active agent).

Comp.: Comparative sample

As is apparent from Table I, it was proved that the samples of this invention were superior to the comparative sample.

As proved in the example I, the preparation method of a radiation image conversion panel and a stimulable phosphor of the present invention, exhibit little delayed luminescence and superiority of luminance unevenness, and also exhibit superior effects of low cost, high luminance and high sharpness.

**Example II**

Preparation of Radiation Image Conversion Panel Samples II-1 through II-11 (described as Samples II-1 through II-11 in Table II)

Forming Method of Stimulable Phosphor

$CsCO_3$, HBr and $Eu_2O_3$ were dissolved in water to obtain a solution so that the Eu amount was 5/10,000 mol per mol of CsBr. The foregoing aqueous solution was condensed at 90 - 110 °C to obtain a saturated solution.

The foregoing saturated solution was cooled at 50 °C to precipitate CsBr particles, and obtained was a CsBr: Eu phosphor particle precursor having an average particle diameter of 5 μm.

This phosphor particle precursor was subjected to calcination in an Ar gas atmosphere at 620 °C for 2hrs. to obtain the phosphor.

In order to form a phosphor layer, the foregoing phosphor and a polyester solution (VYLON 63ss, produced by TOYOBO CO., LTD.) were mixed and dispersed to obtain a coating composition of a resin solution of 95 weight% solid content and 5 weight% phosphor.

The thus obtained coating composition was coated onto 188 μm polyethylene terephthalate film (188 X30, produced by Toray Co., Ltd.), to obtain a stimulable phosphor layer, providing three drying zones of 80, 100 and 110 °C with a CS (a coating rate) of 2 m/min in an inert drying atmosphere oven using Ar gas.

A support having the foregoing stimulable phosphor layer was sealed into a barrier-envelope having a backing coat with deposition of an alumina oxide, to obtain Radiation Image Conversion Panel Sample II-1.

Radiation Image Conversion Panel Samples II-2 through II-11 were prepared in the same manner as in Example 1, except that the cooling temperature at formation of the phosphor precursor, the kinds of organic solvents, and a drying gas during formation of the phosphor were changed from those of Example II-1.

Each of the thus obtained samples was evaluated in regard to the following characteristics.

Evaluation of Sharpness

Sharpness of each of the obtained radiation image conversion panels was evaluated by determination of a modulation transfer function (MTF).

After a CTF chart was adhered to the respective radiation image conversion panel, each of the panels was X-rayed at 80 kVp in an amount of 10 mR (the distance to the subject being 1.5 m). And then, MTF was determined by scanning the CTF chart image using a semiconductor laser having a diameter of 100 μmφ (680 nm, at a power of 40 mW on the panel). The values on the table were the sum of MTF values at 2.0 1p/mm. The obtained results are shown in Table II.

Evaluation of Luminance and Luminance Distribution (Luminance Unevenness)

Luminance was evaluated using a Regius 350, manufactured by Konica Corp.

Identical to evaluation for sharpness, after the plates were X-rayed at 80 kVp and 10 mAs of a tungsten lamp, at a distance of 2 m between the radiation source and the plates, the plates were placed to be read in a Regius 350. Evaluation was conducted based on electrical signals obtained with a photo multiplier tube.

The electrical signal distribution from a photo multiplier tube in an exposure face was evaluated relatively, and the standard deviation was determined to obtain a luminance distribution (S.D.) of each sample. When the value is smaller, the luminance unevenness is less.

Evaluation of Delayed luminescence

A piece of 50 x 50 mm was cut from each sample, and pasted to a board to be placed into a cassette for exposure.

After X-ray exposure to the pieces, the differences of signals between the 1st and the 50th recording spot from the edge at the time of reading were designated as delayed luminescence values.

Average Particle Size

The average particle size of the stimulable phosphor particles was the average value of 100 phosphor particles measured using an optical particle distribution meter with a laser scattering method, SALD-DS21 manufactured by Shimadzu Corp., after dispersion of CsBr: Eu into an ethanol solvent using an ultrasonic mixer for 2 min.

Table II

| Sample | Formation of Phosphor Precursor | | Formation of Phosphor Layer | Luminance | MTF (2 lp/mm) | Luminance Unevenness (S.D.) | Delayed luminescence | Average Particle Size (μm) |
|---|---|---|---|---|---|---|---|---|
| | Cooling Temperature (°C) | Organic Solvent | Drying Gas | | | | | |
| II-1 (Inv.) | 50 | – | Ar | 0.87 | 32% | 12 | 0.00012 | 4.8 |
| II-2 (Inv.) | 30 | – | Ar | 0.92 | 34% | 8 | 0.00022 | 3.3 |
| II-3 (Inv.) | 10 | – | Ar | 1.21 | 36% | 6 | 0.00032 | 1.6 |
| II-4 (Inv.) | 501 | 100mlEtOH | Ar | 1.72 | 40% | 5 | 0.00007 | 3.8 |
| II-5 (Inv.) | 50 | 200mlEtOH | Ar | 1.45 | 42% | 3 | 0.00005 | 2.5 |
| II-6 (Inv.) | 50 | 300mlEtOH | Ar | 1.58 | 45% | 3 | 0.00004 | 1.8 |
| II-7 (Inv.) | 50 | | $N_2$ | 1.36 | 32% | 13 | 0.00021 | 4.8 |
| II-8 (Inv.) | 50 | | He | 1.55 | 34% | 14 | 0.00018 | 4.8 |
| II-9 (Comp.) | 100 | – | Ar | 0.26 | 6% | 72 | 0.00132 | 200 |
| II-10 (Comp.) | 90 | – | Ar | 0.34 | 8% | 63 | 0.02698 | 60 |
| II-11 (Comp.) | 50 | – | air | 0.13 | 15% | 33 | 0.00328 | 4.8 |

Inv.: Sample of this Invention     Comp.: Comparative Sample

As is apparent from Table II, it was proved that the samples of this invention were superior to the comparative sample.

As proved in the example II, the preparation method of a radiation image conversion panel and a stimulable phosphor of the present invention, exhibit superiority of delayed luminescence characteristics and luminance unevenness, and also low cost, high luminance and high sharpness, being superior effects.

**Example III**

Preparation of Radiation Image Conversion Panel Samples III-1 through III-8 (hereinafter, refers to simply as Sample) Forming Method of Stimulable Phosphor

$CsCO_3$, HBr and $Eu_2O_3$ were added to dissolve in 1,000 ml of water so that the Cs content in the phosphor layer was 50 weight% and the Eu amount was 5/10,000 mol per mol of CsBr. The foregoing solution was subjected to calcination in an Ar gas atmosphere at 620 °C for 2 hrs., and further the phosphor particles were heated at 100 °C under ambient atmospheric pressure to obtain the phosphor.

In order to form a phosphor layer, the foregoing phosphor and a polyester solution (VYLON 63ss, produced by TOYOBO CO., LTD.) were mixed and dispersed to obtain a coating composition of a resin solution of 95 weight% solid content and 5 weight% phosphor.

The thus obtained coating composition was coated onto a 188 μm polyethylene terephthalate film (188 X30, produced by Toray Co., Ltd.), to obtain a stimulable phosphor layer, providing three drying zones of 80, 100 and 110 °C with a CS (a coating rate) of 2 m/min in an inert drying atmosphere oven using Ar gas.

The support having the foregoing stimulable phosphor layer was sealed into a barrier-envelope having a backing coat with deposition of an alumina oxide, to obtain Radiation Image Conversion Panel Sample III-1.

Radiation Image Conversion Panel Samples III-2 through III-8 were prepared in the same manner as in Example III, except that the heating temperature and the degree of vacuum were changed from those of Example III.

Each of the thus obtained samples was evaluated in regard to the following characteristics.

Evaluation of Sharpness

Sharpness of each of the obtained radiation image conversion panels was evaluated by determination of a modulation transfer function (MTF).

After a CTF chart was adhered to the respective radiation image conversion panel, each of the panels was X-rayed at 80 kVp in an amount of 10 mR (the distance to the subject being 1.5 m). And then, MTF was determined by scanning the CTF chart image using a semiconductor laser having a diameter of 100 μmφ (680 nm, at a power of 40 mW on the panel). The values in the table were the sum of MTF values at 2.0 1p/mm. The obtained results are shown in Table III.

Evaluation of Luminance

Luminance was evaluated using a Regius 350, manufactured by Konica Corp.

Identical to evaluation of sharpness, after the plates were X-rayed at 80 kVp and 10 mAs of a tungsten lamp, at a distance of 2 m between the radiation source and the plates, the plates were placed in a Regius 350 for reading. Evaluation was conducted based on electrical signals obtained through a photo multiplier tube.

Evaluation of Durability (Moisture Resistance)

Each sample was maintained in a condition of 30 °C and a relative humidity of 80% as an environmental test. Meanwhile, durability is defined by the total number of days after which luminance decreased to 80 from original luminance of 100 before the above incubating test. When the number of days is greater, the durability is more superior.

In Table, "temperature" represents the heating temperature of each phosphor particle.

Table III

| Sample | Heating Temperature | Degree of Vacuum | Luminance | MTF (2.0 lp/mm) | Durability 30 °C at 80% RH | Cs Content (weight%) |
|---|---|---|---|---|---|---|
| III-1(Inv.) | 100 °C | Atmospheric pressure | 0.77 | 11% | 24 days | 50 |
| III-2(Inv.) | 300 °C | Atmospheric pressure | 0.82 | 13% | 33 days | 60 |
| III-3(Inv.) | 400 °C | Atmospheric pressure | 1.44 | 32% | 60 days | 63 |

Table III   (continued)

| Sample | Heating Temperature | Degree of Vacuum | Luminance | MTF (2.0 lp/mm) | Durability 30 °C at 80% RH | Cs Content (weight%) |
|---|---|---|---|---|---|---|
| III-4(Inv.) | 500 °C | Atmospheric pressure | 1.67 | 33% | 66 days | 63 |
| III-5(Inv.) | 600 °C | Atmospheric pressure | 1.55 | 32% | 68 days | 63 |
| III-6(Inv.) | 630 °C | Atmospheric pressure | 1.68 | 34% | 67 days | 63 |
| III-7(Comp.) | 600 °C | Vacuum of 1.0 x $10^{-3}$ | 1.32 | 37% | 10 hrs | 8 |
| III-8(Comp.) | 600 °C | Vacuum of 1.0 x $10^{-3}$ | 1.54 | 35% | 24 hrs | 8 |

Inv.: Sample of this Invention

Comp.: Comparative Sample

As is apparent from Table III, it was proved that the samples of this invention were superior to the comparative sample.

As proved in the example III, the preparation method of a radiation image conversion panel and a stimulable phosphor of the present invention, exhibit little delayed luminescence and superiority of luminance unevenness, and also the superior effects of low cost, high luminance and high sharpness.

**Example IV**

The preparation of Radiation Image Conversion Panel Samples IV-1 through IV-8 (in Table IV, Samples IV-1 through IV-8) Formation Method of Stimulable Phosphor

$CsCO_3$, HBr and $Eu_2O_3$ were dissolved in water to obtain a solution so that the Eu amount was 5/10,000 mol per mol of CsBr. The solution was condensed to a saturated solution at 90 - 110 °C, to obtain an aqueous solution liquid phase (an aqueous phase).

After forming a liquid film cambium of EDTA onto that aqueous solution liquid phase, the aqueous solution phase formed sequentially an organic phase thereon containing isopropyl alcohol, were mixed at 3,000 rpm using a homogenizer, resulting in deposition of CsBr particles to obtain a CsBr: Eu phosphor precursor with an average particle diameter of 5 $\mu$m. The ratio of the aqueous phase and the organic phase was 1: 1.

This phosphor precursor was sublimated in an Ar gas atmosphere at 700 °C and trapped in a cooling zone via a by-path to obtain the phosphor as a matrix.

In order to form a phosphor layer, the foregoing phosphor was mixed and dispersed to obtain a coating composition using a polyester solution (VYLON 63ss, produced by TOYOBO CO., LTD.) of a solid content of 95 weight%, as a resin solution of the phosphor at 5 weight%.

The thus obtained coating composition was coated onto a 188 $\mu$m polyethylene terephthalate film (188 X30, produced by Toray Co., Ltd.), to obtain a stimulable phosphor layer, providing three drying zone processes of 80, 100 and 110 °C with a coating rate and a drying rate of 2 m/min. in an inert drying atmosphere oven using Ar gas after coating.

A support having the foregoing stimulable phosphor layer was sealed into a barrier-envelope having a backing coat with deposition of an alumina oxide, to obtain Radiation Image Conversion Panel Sample IV-1.

Radiation Image Conversion Panel Samples IV-2 through IV-8 were prepared in the same manner as in Example IV, except that phosphor particles were dispersed into fine particles after changing the foregoing ratio of an aqueous phase and an organic phase, and also changing the kinds of organic solvents (having different solubility) in Example IV.

The thus obtained Radiation Image Conversion Panel Samples IV-1 through IV-8 were measured to evaluate the following characteristics.

Evaluation of Sharpness

Sharpness of each obtained Radiation Image Conversion Panel Sample was evaluated by determination of a modulation transfer function (MTF) .

After a CTF chart was adhered to the respective Radiation Image Conversion Panel Sample, each of the panels was X-rayed at 80 kVp in an amount of 10 mR (the distance to the subject being 1.5 m). And then, MTF was determined by scanning the CTF chart image using a semiconductor laser having a diameter of 100 $\mu$m$\phi$ (680 nm, at a power of 40 mW on the panel). The values on the table were the sum of MTF values at 2.0 1p/mm. The obtained results are shown in Table IV.

Evaluation of Luminance

Luminance was evaluated using a Regius 350, manufactured by Konica Corp.

Identical to evaluation of sharpness, after the plates were X-rayed at 80 kVp and 10 mAs of a tungsten lamp, at a distance of 2 m between the radiation source and the plates, the plates were placed to be read in a Regius 350. Evaluation was conducted based on electrical signals obtained through a photo multiplier tube.

Evaluation of Luminance Unevenness

After each of the obtained panels were X-rayed at 80 kVp at 10 mAs, and at 2 m of exposure tube distance, reading was conducted using a Regius 350 (manufactured by Konica Corp.), to determine a digital signal from a uniform image data with standard deviation S.D., using this value as luminance unevenness.

Measurement of (2,0,0) Surface Ratio

Each of the obtained phosphors was measured with a powder X-ray diffraction method in a glass sample holder using a RINT 2000, manufactured by Rigaku-Sha, Co.

Supposing the obtained 43° peak as a (2,0,0) surface, the ratio of a (2,0,0) surface was determined based on the total strength of peaks having more than 5% peak strength with the maximum peak being 100%.

Measurement of the Amount of Compound, except for Matrix CsBr

The phosphors were dissolved in pure water, and the solutions were measured using ICP. The amount of compounds, except for matrix CsBr, is described as the total amount (ppm) in the table.

Evaluation of Delayed Luminescence = Photostimulated Delayed Luminescence

Supposing the standard signal of an image portion being $E_0$, delayed luminescence was designated by the value at which the signal value of the 50th recording spot from the edge having no images was divided by the standard signal. Evaluation of Instantaneous Delayed Luminescence = X-ray Instantaneous Delayed Luminescence

Instantaneous delayed luminescence is the value which was determined by reading without laser radiation, based on the initial point reading being 1.0 and the terminal point reading being the delayed luminescence amount.

The results are shown below.

Table IV

| | | Total Amount (ppm) | (2,0,0) Surface Ratio % | Luminance | MTF (2 lp/mm) (%) | Luminance Unevenness | Delayed Luminescence | Instantaneous Delayed luminescence | Sample |
|---|---|---|---|---|---|---|---|---|---|
| Comparative Example IV-1 | Sublimation | 3325 | 42 | 0.68 | 34 | 12 | 0.00004 | 0.3862 | 1 |
| Comparative Example IV-2 | Sublimation | 2124 | 48 | 0.72 | 33 | 8 | 0.00002 | 0.2731 | 2 |
| Example IV-1 | Sublimation | 995 | 72 | 1.82 | 32 | 6 | 0.00003 | 0.0018 | 3 |
| Example IV-2 | Sublimation | 428 | 92 | 1.92 | 41 | 5 | 0.00007 | 0.0002 | 4 |
| Example IV-3 | Sublimation | 332 | 99 | 1.62 | 42 | 3 | 0.00005 | 0.0004 | 5 |
| Example IV-4 | Sublimation | 125 | 100 | 1.58 | 44 | 3 | 0.00004 | 0.0002 | 6 |
| Comparative Example IV-3 | Sublimation | 66 | 90 | 0.24 | 31 | 1 | 0.00004 | 0.0003 | 7 |

As is apparent from Table IV, it was proved that the samples of this invention were superior to the comparative samples.

As proved in the example IV, the preparation method of a radiation image conversion panel and a stimulable phosphor of the present invention, exhibit improved stability (at slight luminance unevenness), superiority of delayed luminescence characteristics and instantaneous delayed luminescence, and also high luminance and high sharpness, being the superior effects.

**Claims**

1.  A radiation image converting panel comprising a support having thereon a stimulable phosphor layer containing a polymer and a stimulable phosphor produced by sublimation of a CsBr:Eu precursor, the stimulable phosphor layer having a thickness of 50 μm to 1 mm,
    wherein the stimulable phosphor has a spherical shape.

2.  The radiation image converting panel of claim 1,
    wherein the stimulable phosphor has an average particle diameter of 0.1 to 5 μm.

3.  The radiation image converting panel of claim 1 or 2,
    wherein the stimulable phosphor layer comprises Cs atom in an amount of not less than 10% based on the total weight of the layer.

4.  The radiation image converting panel of claim 1, 2 or 3,
    wherein the stimulable phosphor layer comprises:

    (i) CsBr; and
    (ii) Eu and an impurity,

    an amount of Eu and the impurity being 100 to 1000 ppm by weight based on the total weight of CsBr.

5.  The radiation image converting panel of claim 1,2, 3 or 4,
    wherein the stimulable phosphor is represented by Formula (1):

    Formula (1)

    $$M^1X \cdot aM^2X' \cdot bM^3X'' : eA$$

    wherein $M^1$ is at least one alkaline metal atom selected from the group consisting of Li, Na, K, Rb, and Cs;, $M^2$ is at least one divalent metal atom selected from the group consisting of Be, Mg, Ca, Sr, Ba, Zn, Cd, Cu, and Ni; $M^3$ is at least one trivalent metal atom selected from the group consisting of Sc, Y, La, Ce, Pr, Nd, Pm, Sm, Sm, Eu, Gd, Tb, Dy, Ho, Er, Tm, Yb, Lu, Al, Ga and In; X, X', and X" each represents at least one halogen atom selected from the group consisting of F, Cl, Br, and I; A represents at least one metal atom selected from the group consisting of Eu, Tb, In, Ce, Tm, Dy, Pr, Ho, Nd, Yb, Er, Gd, Lu, Sm, Y, Tl, Na, Ag, Cu, and Mg; and a, b, and e each are numbers satisfying the conditions of $0 \le a < 0.5$, $0 \le b < 0.5$, and $0 < e \le 0.2$.

6.  The radiation image converting panel of claim 1, 2, 3, 4 or 5,
    wherein the stimulable phosphor has a peak at (2,0,2) as a maximum peak measured with X-ray diffraction.

7.  A method for producing the stimulable phosphor of any of claims 1 to 6, comprising the steps of:

    (i) forming a CsBr:Eu precursor with an emulsified layer method by mixing:

        (a) an aqueous solution containing Cs ions, Br ions and Eu ions;
        (b) an organic solvent having a different solubility for the Cs ions, the Br ions and the Eu ions; and
        (c) a surface active agent;

    (ii) isolating the CsBr:Eu precursor, and
    (ii) burning the CsBr:Eu precursor to obtain the stimulable phosphor.

8. A method for producing the stimulable phosphor of any of claims 1 to 6, comprising the steps of:

(i) forming an aqueous phase containing Cs ions, Br ions and Eu ions;
(ii) adding an organic phase containing an organic solvent and an surface active agent to the aqueous phase so as to obtain a CsBr:Eu precursor;
(iii) isolating the CsBr:Eu precursor, and
(iv) burning the CsBr:Eu precursor to obtain the stimulable phosphor.

9. A method for producing the stimulable phosphor of any of claims 1 to 6, comprising a step of:

heating the stimulable phosphor between 400 to 700 °C under an atmospheric pressure.

10. A method for producing the radiation image converting panel of any of claims 1 to 6, comprising the steps of:

(i) mixing a stimulable phosphor and a polymer to obtain a coating mixture;
(ii) coating the coating mixture on a support to obtain a coated layer; and
(iii) heating the coated layer under an inactive gas atmosphere so as to dry the coated layer.

# FIG. 1